(19) Europäisches Patentamt
European Patent Office
Office européen des brevets

(11) EP 3 230 896 B1

(12) EUROPEAN PATENT SPECIFICATION

(45) Date of publication and mention
of the grant of the patent:
**12.09.2018 Bulletin 2018/37**

(51) Int Cl.:
*G06F 17/27* (2006.01)          *G06F 17/28* (2006.01)

(21) Application number: **15816945.8**

(22) Date of filing: **30.11.2015**

(86) International application number:
**PCT/US2015/062872**

(87) International publication number:
**WO 2016/094096 (16.06.2016 Gazette 2016/24)**

(54) **LOCALIZATION COMPLEXITY OF ARBITRARY LANGUAGE ASSETS AND RESOURCES**

LOKALISIERUNGSKOMPLEXITÄT VON WILLKÜRLICHEN SPRACH-ASSETS UND RESSOURCEN

COMPLEXITÉ DE LOCALISATION DE BIENS ET RESSOURCES LINGUISTIQUES ARBITRAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.12.2014 US 201414563029**

(43) Date of publication of application:
**18.10.2017 Bulletin 2017/42**

(73) Proprietor: **Microsoft Technology Licensing, LLC
Redmond, Washington 98052-6399 (US)**

(72) Inventors:
• **COGLEY, James**
**Redmond, WA 98052-6399 (US)**
• **GROVES, Declan**
**Redmond, WA 98052-6399 (US)**
• **JONES, Michael Aziel**
**Redmond, WA 98052-6399 (US)**
• **HEDLEY, Michael Reid**
**Redmond, WA 98052-6399 (US)**

(74) Representative: **CMS Cameron McKenna Nabarro
Olswang LLP
Cannon Place
78 Cannon Street
London EC4N 6AF (GB)**

(56) References cited:
**GB-A- 2 345 358          US-A1- 2013 238 313
US-A1- 2013 282 628**

• **NANCY L UNDERWOOD ET AL: "Translatability
Checker: A Tool to Help Decide Whether to Use
MT", PROCEEDINGS OF MT SUMMIT VIII:
MACHINE TRANSLATION IN THE INFORMATION
AGE., 18 July 2001 (2001-07-18), XP055106452,
Santiago de Compostela, Spain**

**Description**

**BACKGROUND**

Content authoring and Quality Prediction (QP) are automated language-based tools that are often used in translating language strings from one language to another language. Some existing content authoring tools use various hand-written pre-defined rules to identify potential translation issues. In contrast, QP generally operates by attempting to assign a predictive value to the results of translating a source language string. In other words, QP generally operates to predict the likely quality that will result from a machine-based translation of an input comprising a source language string to another language.

"Translatability Checker: A Tool to Help Decide Whether to Use MT", by Nancy L. Underwood et al, describes a tool designed to assess the machine translatability of English source texts by assigning a translatability index to both individual sentences and the text as a whole. The tool is designed to be both stand-alone and integratable into a suite of other tools which together help to improve the quality of professional translation in the preparatory phase of the translation workflow. It is therefore based on tagging and pattern matching technologies which bring with them a certain level of indeterminacy. An annotated version of the text is simultaneously produced to allow the user to interpret the results of the checker.

**SUMMARY**

The invention provides a computer-implemented process, a system, and a computer-readable medium as claimed hereinafter. The following Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. Further, while certain disadvantages of other technologies may be noted or discussed herein, the claimed subject matter is not intended to be limited to implementations that may solve or address any or all of the disadvantages of those other technologies. The sole purpose of this Summary is to present some concepts of the claimed subject matter in a simplified form as a prelude to the more detailed description that is presented below.

In general, a "Linguistic Complexity Tool," as described herein, provides various techniques for assigning a complexity measure, also referred to herein as a "source complexity score," relevant to localization of source language assets and resources into alternate languages. Note that source language assets and resources (also referred to herein as "source content") are defined as comprising any language-based content for expressing ideas, including words, sentences, numbers, expressions, acronyms, etc. More specifically, in various implementations, the Linguistic Complexity Tool provides a Machine Learning (ML) based system which predicts source complexity scores for entire source language assets and resources, or one or more subsections of that source content, to provide users with a predicted level of difficulty in localizing that source content into a particular target or destination language, dialect, or linguistic style. Note also that when training the model, the number of times that a particular language asset or resource was localized may also be considered in the case where the final localization was subsequently deemed to be incorrect (e.g., when a "bug" was identified in the localized version of the language asset or resource).

In view of the above summary, it is clear that the Linguistic Complexity Tool described herein provides various techniques for predicting source complexity scores for entire source language assets or resources, or one or more subsections of source language assets or resources, to provide users with a predicted level of difficulty in localizing that source content into a particular target language, dialect, or linguistic style. In addition to the just described benefits, other advantages of the Linguistic Complexity Tool will become apparent from the detailed description that follows hereinafter when taken in conjunction with the accompanying drawing figures.

**BRIEF DESCRIPTION OF THE DRAWINGS**

The specific features, aspects, and advantages of the claimed subject matter will become better understood with regard to the following description, appended claims, and accompanying drawings where:

FIG. 1 provides an exemplary architectural flow diagram that illustrates program modules for effecting various implementations of a Linguistic Complexity Tool for predicting source complexity scores to provide users with a predicted level of difficulty in localizing source language assets or resources, as described herein.

FIG. 2 provides a flow diagram that illustrates an exemplary implementation for training machine-learned predictive linguistic-based models, as described herein.

FIG. 3 provides a flow diagram that illustrates an exemplary implementation for using machine-learned predictive linguistic-based models to predict complexity scores for arbitrary source content, as described herein.

FIG. 4 illustrates a general system flow diagram that illustrates exemplary methods for effecting various implementations of the Linguistic Complexity Tool, as described herein.

FIG. 5 is a general system diagram depicting a simplified general-purpose computing device having simplified computing and I/O capabilities for use in effecting various implementations of the Linguistic Complexity Tool, as described herein.

## DETAILED DESCRIPTION

In the following description of various implementations of a "Linguistic Complexity Tool," reference is made to the accompanying drawings, which form a part hereof, and in which is shown by way of illustration specific implementations in which the Linguistic Complexity Tool may be practiced. It should be understood that other implementations may be utilized and that structural changes may be made without departing from the scope thereof.

It is also noted that, for the sake of clarity, specific terminology will be used to describe the various implementations described herein, and that it is not intended for these implementations to be limited to the specific terms so chosen. Furthermore, it is to be understood that each specific term includes all its technical equivalents that operate in a broadly similar manner to achieve a similar purpose. Reference herein to "one implementation," or "another implementation," or an "exemplary implementation," or an "alternate implementation" or similar phrases, means that a particular feature, a particular structure, or particular characteristics described in connection with the implementation can be included in at least one implementation of the Linguistic Complexity Tool, and that some or all of those implementations may be used in combination. Further, the appearance of such phrases throughout the specification are not necessarily all referring to the same implementation, nor are separate or alternative implementations mutually exclusive of other implementations. It should also be understood that the order described or illustrated herein for any process flows representing one or more implementations of the Linguistic Complexity Tool does not inherently indicate any requirement for the processes to be implemented in the order described or illustrated, nor does any such order described or illustrated herein for any process flows imply any limitations of the Linguistic Complexity Tool.

As utilized herein, the terms "component," "system," "client" and the like are intended to refer to a computer-related entity, either hardware, software (e.g., in execution), firmware, or a combination thereof. For example, a component can be a process running on a processor, an object, an executable, a program, a function, a library, a subroutine, a computer, or a combination of software and hardware. By way of illustration, both an application running on a server and the server can be a component. One or more components can reside within a process and a component can be localized on one computer and/or distributed between two or more computers. The term "processor" is generally understood to refer to a hardware component, such as a processing unit of a computer system.

Furthermore, to the extent that the terms "includes," "including," "has," "contains," variants thereof, and other similar words are used in either this detailed description or the claims, these terms are intended to be inclusive in a manner similar to the term "comprising" as an open transition word without precluding any additional or other elements.

## 1.0 Introduction:

In general, a "Linguistic Complexity Tool," as described herein, uses various Machine Learning (ML) based techniques to predict "source complexity scores" for localization of source language assets or resources (also referred to herein as "source content"), or one or more subsections of those assets or resources. In other words, these source complexity scores provide users with predicted levels of difficulty in localizing source language assets or resources, or subsections of those assets or resources, into particular target languages, dialects, or linguistic styles. Note that source language assets or resources are defined as comprising any language-based content for expressing ideas, including words, sentences, numbers, expressions, acronyms, etc.

Advantageously, in various implementations, the Linguistic Complexity Tool identifies one or more elements of the arbitrary source content that increase the predicted source complexity score. This allows users to modify one or more identified sections of the arbitrary source content to decrease the predicted source complexity score of those identified sections. In various implementations, the Linguistic Complexity Tool further assists the user in this process by automatically identifying and presenting one or more suggested changes to the arbitrary source content that will decrease the predicted complexity score. In related implementations, the Linguistic Complexity Tool provides real-time complexity scoring of source language assets or resources as those assets or resources are being input or created by a user via a user interface or the like.

More specifically, the source complexity scores provided by the Linguistic Complexity Tool enable a number of different use cases that provides a variety of advantages to the user. As described throughout this document, these advantages include, but are not limited to improved user efficiency and user interaction performance by identifying language assets or resources, or subsections of those assets or resources, that are likely to be difficult or time consuming for users to localize. Further, by using the source complexity scores for identifying language assets or resources, or subsections of those assets or resources, that are likely to be difficult for users to localize, that source content can be modified prior to localization to provide lower source complexity scores (i.e., source content that is less difficult to localize). Such modifications serve to reduce error rates with respect to localized text or language presented in software applications or other media including, but not limited to, spoken or written localization of the source content.

## 1.1 System Overview:

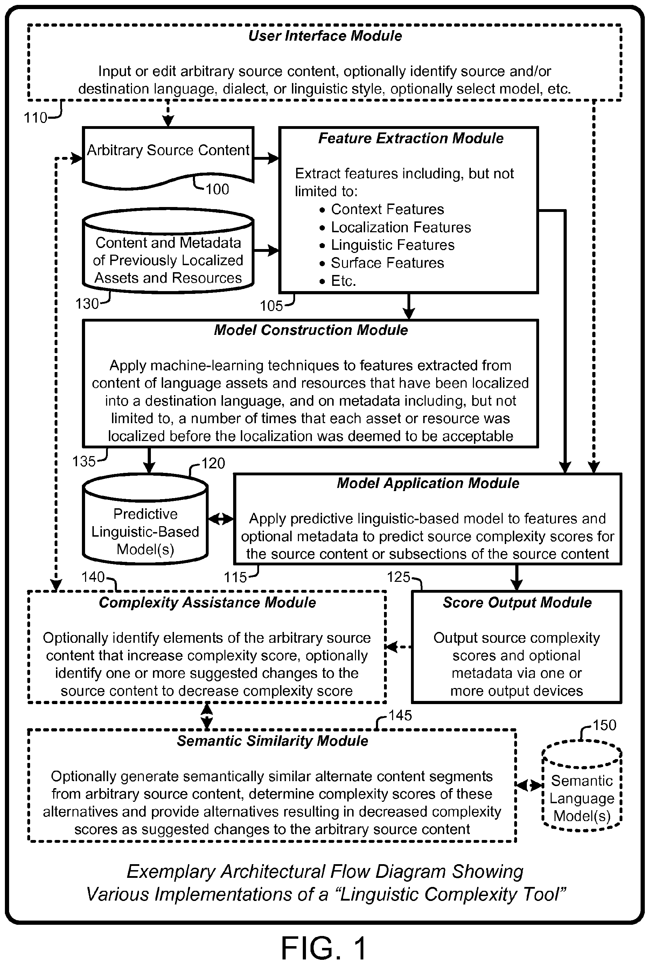

As noted above, the "Linguistic Complexity Tool," provides various techniques for predicting source complexity scores for entire source language assets or resources, or one or more subsections of source language assets or resources, to provide users with a predicted level of difficulty in localizing that source content into a particular target language, dialect, or linguistic style. The processes summarized above are illustrated by the general system diagram of FIG. 1. In particular, the system diagram of FIG. 1 illustrates the interrelationships between program modules for implementing various implementations of the Linguistic Complexity Tool, as described herein. Furthermore, while the system diagram of FIG. 1 illustrates a high-level view of various implementations of the Linguistic Complexity Tool, FIG. 1 is not intended to provide an exhaustive or complete illustration of every possible implementation of the Linguistic Complexity Tool as described throughout this document.

In addition, it should be noted that any boxes and interconnections between boxes that may be represented by broken or dashed lines in FIG. 1 represent alternate implementations of the Linguistic Complexity Tool described herein, and that any or all of these alternate implementations, as described below, may be used in combination with other alternate implementations that are described throughout this document.

In general, as illustrated by FIG. 1, the processes enabled by various implementations of the Linguistic Complexity Tool begin operation by providing arbitrary source content 100 comprising any combination of language-based content for expressing ideas, including words, sentences, numbers, expressions, acronyms, etc., to a feature extraction module 105. The feature extraction module 105 acts to extract any desired combination of optional metadata and features from the arbitrary source content 100 that include, but are not limited to context features, localization features, linguistic features, surface features, etc. Note that in various implementations, an optional user interface module 110 is provided to enable the user to input or edit arbitrary source content 100, optionally identify source and/or destination languages, dialects, or linguistic styles, optionally select corresponding predictive linguistic-based models 120, etc.

The Linguistic Complexity Tool then provides the extracted features and optional metadata to a model application module 115. The model application module 115 applies one or more predictive linguistic-based models 120 to the features and optional metadata extracted from the arbitrary source content 100 to predict source complexity scores for that content or for one or more subsections of that content. A score output module 125 then outputs source complexity scores and optional metadata via one or more output devices.

In general, as discussed in further detail herein, the predictive linguistic-based models 120 are trained on the original (i.e., unlocalized) content 130 and metadata of previously unlocalized language assets or resources. More specifically, in various implementations, a model construction module 135 applies various machine-learning techniques to features extracted from the original content 130 comprising language assets or resources (e.g., any combination of language-based content for expressing ideas, including words, sentences, numbers, expressions, acronyms, etc.) that have been localized into a destination or target language, and on corresponding metadata including, but not limited to, a number of times that each of those language assets or resources was localized before the localization was deemed to be acceptable. Note also that when training the model, the number of times that content was localized may also be considered in the case where the final localization was subsequently deemed to be incorrect (e.g., when a "bug" was identified in the localized content).

In various implementations, an optional complexity assistance module 140 optionally identifies elements of the arbitrary source content 100 that increase complexity score. Further, in various implementations, the complexity assistance module 140 optionally identifies one or more suggested changes to the arbitrary source content 100 for purposes of decreasing the complexity score of that content. In general, an optional semantic similarity module 145 optionally generates semantically similar alternate content segments from the arbitrary source content 100 by applying one or more semantic language models to the arbitrary source content 100. In addition, the Linguistic Complexity Tool then uses the techniques described above to determine complexity scores resulting from the use these alternatives as a replacement for some or all of the arbitrary source content 100. The semantic similarity module 145 then optionally provides the user with one or more of these alternatives resulting in decreased complexity scores as suggested changes to the arbitrary source content 100.

## 2.0 Operational Details of the Linguistic Complexity Tool:

The above-described program modules are employed for implementing various implementations of the Linguistic Complexity Tool. As summarized above, the Linguistic Complexity Tool provides various techniques for predicting source complexity scores for entire source language assets or resources, or one or more subsections of source language assets or resources, to provide users with a predicted level of difficulty in localizing that source content into a particular target language, dialect, or linguistic style. The following sections provide a detailed discussion of the operation of various implementations of the Linguistic Complexity Tool, and of exemplary methods for implementing the program modules described in Section 1 with respect to FIG. 1. In particular, the following sections provides examples and operational details of various implementations of the Linguistic Complexity Tool, including:

- Operational overview of various implementations of the Linguistic Complexity Tool;
- Complex language assets or resources;
- Extracting features from content;
- Constructing predictive linguistic-based models;
- Predicting and presenting complexity scores;
- Generation of semantically similar alternatives to reduce complexity of arbitrary source content; and
- Exemplary applications of the Linguistic Complexity Tool.

## 2.1 Operational Overview:

In general, the Linguistic Complexity Tool extracts features and optional metadata from arbitrary source assets or resources based on linguistic and metadata analyses of that source content. The Linguistic Complexity Tool uses this information to predict source complexity scores that give the user information about the expected effort to localize the arbitrary source content into a particular target or destination language, dialect, or linguistic style. In other words, in various implementations, the Linguistic Complexity Tool provides a Machine Learning (ML) based system that predicts source complexity scores for entire source language assets or resources, or one or more subsections of source language assets or resources. These scores provide users with a predicted level of difficulty in localizing the source content into a particular target or destination language, dialect, or linguistic style.

In various implementations, the Linguistic Complexity Tool determines the number of times that a plurality of different language assets or resources are each localized from a particular source language, dialect, or linguistic style into a particular destination language, dialect, or linguistic style, until an acceptable localization result is achieved. The resulting number of localizations is used as a measure of complexity, in combination with content and metadata of the source assets or resources, for use in generating a machine-learned predictive linguistic-based model. The Linguistic Complexity Tool then uses the machine-learned predictive linguistic-based model to predict complexity scores for arbitrary source assets or resources. Advantageously, in various implementations, the Linguistic Complexity Tool provides module-based solution that can be integrated into, or used in conjunction with, any existing or future application (e.g., word processing applications, search engines, translation or localization software tools, etc.) for determining complexity scores and optionally ranking multiple content items in order of predicted localization difficulty. Consequently, human translators and localizers are not required to understand the inner workings of the Linguistic Complexity Tool to use the tool to determine complexity of arbitrary source content.

Exemplary uses of the resulting source complexity score include, but are not limited to:

- Providing metadata for use in planning language asset or resource localization test cases;
- Providing metadata to human translators to increase productivity with respect to localization of language assets or resources and software;
- Providing real-time or post-processing feedback on complexity of language assets or resources to content authors for use in minimizing localization difficulty;
- Providing complexity-based contextual information to human reviewers and translators to minimize re-localization time and costs;
- Providing complexity information to human translators for use in helping to identify likely areas of inconsistencies and ambiguity in localization of language assets or resources;
- Complexity-based prioritization of language asset or resource localizations likely to result in errors;
- Suggesting changes to the arbitrary source content for reducing source complexity scores;
- Providing complexity information to voice actors/producers for use in helping identify likely areas of inconsistencies or intonation;
- Etc.

## 2.2 Complex Language Assets and Resources:

As noted above, a language asset or resource, as defined herein, includes any language-based content for expressing ideas, including words, sentences, numbers, expressions, acronyms, etc. Typically, the complexity of any particular language assets or resources tends to increase with the number of localization passes.

Consequently, a complex language assets or resources is defined herein as comprising content for which more than one localization pass was done before the localization was deemed to be acceptable, or as a language asset or resource for which the resulting localization was deemed to contain one or more errors following one or more localization passes. However, other factors may also contribute to the complexity of language assets or resources, including, but not limited to, proportion of translatable text, ambiguity, readability, context, etc. As discussed in further detail in Section 2.3 of this document, examples of additional features associated with language assets or resources that may contribute to complexity can be generally categorized into surface features, linguistic features, extralinguistic features, etc.

## 2.3 Extracting Features from Content:

In various implementations, the Linguistic Complexity Tool extracts a variety of features from unlocalized versions of previously localized language assets or resources for use in training, learning, or otherwise constructing one or more predictive linguistic-based models. These same features (or some subset of these features) are then extracted from arbitrary source content and passed to the predictive linguistic-based models for use in predicting complexity scores for that arbitrary source content.

More specifically, in various implementations, the Linguistic Complexity Tool extracts features from previously localized content to create a model that generalizes consistent traits of assets or resources that are difficult or complex for human users to localize. In a general sense, the extracted features can be placed under categories that include, but are not limited to, the following:

**Surface Layer Features:** Surface layer features represent observable traits of the surface form of language assets or resources. These traits of the language assets or resources include, but are not limited to, the length, the number of tokens, number of capitalized tokens, etc.

**Linguistic Layer Features:** Linguistic layer features in content are identified via various natural language processing (NLP) based pre-processing techniques, including, but not limited to, syntactic analysis (e.g., dependency parsing, part of speech (POS) tagging, etc.), semantic analysis (e.g., homonym detection), etc. In addition, techniques such as language modelling provide statistical representations of linguistic principles and are as such classed as features of the linguistic layer.

**Extralinguistic Layer Features:** Extralinguistic layer features in content represent information that is related to the context of that content. Examples of such context include but are not limited to, whether the language assets or resources represent voice-over content or user interface (UI) content; whether the language assets or resources logically follow preceding language assets or resources; whether the language assets or resources include contextual information such as character biographical information or developer notes accompanying that content; etc.

The aforementioned surface features, linguistic features, and extralinguistic features are provided to capture the general design of content features and are not mutually exclusive. For example, when evaluating particular instances of language assets or resources, surface and linguist processing of that content will generally precede, and provide input for determining, extralinguistic features of that content. Tables 1 through 3, shown below, provide examples of some of the many features in the aforementioned categories of features that may be considered for use in training, learning, or otherwise constructing one or more predictive linguistic-based models:

**Table 1: Exemplary Surface Layer Features**

| Feature | Contribution to Content Complexity |
|---|---|
| Length | Shorter assets or resources are generally less complex to localize |
| Number of Tokens | Assets or resources with fewer tokens are generally less complex to localize |
| Punctuation | Punctuation can affect the way a target will be formatted, adding complexity to localizations |
| Full Sentence | Full sentences, rather than single words without context or large paragraphs, may be less complex to localize |
| Line Breaks | Line breaks often increase localization complexity |
| Word Length | Localization complexity increases with average word length |
| Content Order | Out of order dialog in content generally increases localization complexity |
| Acronyms | Acronyms often increase localization complexity |

(continued)

| Feature | Contribution to Content Complexity |
|---|---|
| Quotation Marks | Usage of quotations may increase localization complexity |
| Token Length | Assets or resources may have constraints on the number of allowable tokens |
| Character Length | Assets or resources may have constraints on the length of allowable number of characters |
| Abbreviations | Abbreviations differ across languages and may increase localization complexity |
| Ambiguous Words | Depending upon the source language, particular words, such as the "it" for example, can often be ambiguous |
| Placeholders | Placeholders (e.g., "fill in the blank") typically increase localization complexity |
| Bag of Words | All words are features in typical bag of words processing |

**Table 2: Exemplary Linguistic Layer Features**

| Feature | Contribution to Content Complexity |
|---|---|
| Implicit Gender | Source assets or resources may contain implicit gender information, e.g., a female character will result in female noun and verb agreements in some languages. Character names not identifying gender tend to increase complexity |
| Potential Synonyms | Assets or resources with ambiguous words tend to be more complex to localize |
| Structural Ambiguity | Analyse syntactic information. Assets or resources with multiple valid dependency parses tend to be more complex |
| Passive or Active | Determine whether content is in passive or active voice |
| Double Negation | Double negative phrases may be difficult to localize |
| Distribution of Nouns | A large distribution of nouns may suggest content specific terms, names, places, etc., that are not widely used or known by human translators. This could be problematic for localizations into languages such as German |
| Use of Idioms | Idioms of a given language, where literal translation does not typically suffice, tend to increase complexity |
| Multi-Word Units | Multiword items are susceptible to word-for-word translations that may increase complexity |
| Homonyms | Homonyms, e.g., "bridge", could refer to a part on a person's nose, a structure over water, or a card game. Context in the asset or resource may allow disambiguation of terms, but such terms tend to increase complexity |
| Second Person Pronouns | Target languages often use agreement information, e.g., case, number, gender. The use of second person pronouns in content, e.g., "you", can hide such information, thereby tending to increase complexity |
| Gender Agreement | Flag if target language uses gender agreements |
| Case Agreement | Flag if target language uses case agreements |
| Number Agreement | Flag if target language uses number agreement |
| Ambiguous Content | Identify ambiguous content, e.g., "We saw her duck" |
| Explicit Gender | Similar to implicit gender, but identifies where gender is explicit, by pronoun, e.g., "her" or other identifiers |
| Parse Depth | Increased dependency tree depth of language assets or resources tends to increase complexity |
| Ellipses | Ellipses in language assets or resources can cause ambiguity that tends to increase complexity |

(continued)

| Feature | Contribution to Content Complexity |
|---|---|
| Number of Chunks | Number of chunks in the language assets or resources |
| Translation Distance | Perform machine translation (MT) of content from source to target then back to source to produce MT version of source. Larger computed distance between MT version of source and original content implies increased complexity |
| Relative Number of Content Words | Large number of content words in language assets or resources, relative to total number of terms in the language assets or resources tends to increase complexity |
| Plural Addressees | Identifies the number of individuals being spoken to |
| Tone | Identify whether tone of the content is formal or informal |
| Addressee Gender | Identify gender of individuals being spoken to |
| Noun Compounds | Identifies noun compounds, e.g., "lion city" |
| Hyphenation | Identifies hyphenation, since there are often different rules in different languages for hyphenation use |
| Adjectives | Identify adjectives that modify nouns to find agreement issues |
| Gaming Language Score | Produce a probability of the likelihood of the content, or some portion, occurring in previous gaming content. Previously occurring content may have reduced complexity |
| General Language Score | Produce a probability of the likelihood of the content occurring in general domain text. Previously occurring content may have reduced complexity |
| Language Model Loss Score | The difference of Gaming Language Score and General Language Score, used to account for loss of context errors |
| Meaning Expansion | Compute number of tokens times number of meanings per token. Higher results indicate increased complexity |
| Normal Meaning | Compute number of meanings per token divided by the number of content words. Higher results indicate increased complexity |
| Bag of POS | Tag content with POS labels, each POS tag is a feature |
| POS Score | Produce a log probability of the likelihood of a POS tag sequence. Lower probability indicates higher complexity |

**Table 3: Exemplary Extralinguistic Layer Features**

| Feature | Contribution to Content Complexity |
|---|---|
| UI Assets or Resources | These types of features may signify length, presence of non-standard breaks or localization difficulty of content |
| Voice-Over Assets or Resources | These types of features may signify length, presence of non-standard breaks or localization difficulty of content |
| Voice UI Assets or Resources | These types of features may signify length, presence of non-standard breaks or localization difficulty of content |
| Marketplace Assets or Resources | These types of features may signify length, presence of non-standard breaks or localization difficulty of content |
| Help Assets or Resources | These types of features may signify length, presence of non-standard breaks or localization difficulty of content |
| Game Configuration Assets or Resources | These types of features may signify length, presence of non-standard breaks or localization difficulty of content |
| Website Assets or Resources | These types of features may signify length, presence of non-standard breaks or localization difficulty of content |

(continued)

| Feature | Contribution to Content Complexity |
|---|---|
| Context Information | Identify context information accompanying asset or resource as metadata for use by human translators |
| Subtitles | Subtitles often increase complexity through the frequent use of ellipses and line breaks |
| Data Store | Determine whether the source asset or resource is contained in data store of pre-existing translations or localizations |

## 2.4 Constructing Predictive Linguistic-Based Models:

In various implementations, the Linguistic Complexity Tool applies various ML-based techniques to a corpus of training data comprising language assets or resources, and the number of localization passes associated with those language assets or resources, and in combination with various features extracted from that content, to learn, generate, or otherwise construct, a machine-learned predictive linguistic-based model. In other words, one or more machine-learned predictive linguistic-based models are trained on features extracted from a plurality of language assets or resources that have been successfully localized into a destination language, and on a number of times that each of the plurality of source assets or resources was localized into the destination language before the localization was deemed to be acceptable.

It should be noted that localizations of language assets or resources, including localizations that were deemed to be acceptable final localizations of those language assets or resources, are not required for use in training the machine-learned predictive linguistic-based model. Note also that different machine-learned predictive linguistic-based models can be generated for any desired combination of source and destination languages, dialects, and linguistic styles. Simple examples of such combinations of source and destination languages, dialects, and linguistic styles include, but are clearly not limited to, English to German localizations, Chinese to French localizations, localizations from the "Cockney" dialect of British English to the "Southern" dialect of American English, localizations of Italian language assets or resources into English language assets or resources in the linguistic style of the writings of Ernest Hemingway, and so on. Further, in various implementations, multiple machine-learned predictive linguistic-based models representing different combinations of languages, dialects, and linguistic styles may be combined into one or more composite models.

In various implementations, the Linguistic Complexity Tool leverages various supervised machine-learning approaches to classify assets or resources as complex or non-complex, and to assign complexity scores to those assets or resources. However, regardless of whether assets or resources are classified as complex or non-complex, complexity scores may be computed for those assets or resources, as discussed throughout this document. Examples of ML-based techniques that may be adapted for use in learning, generating, or otherwise constructing, the machine-learned predictive linguistic-based model include, but are not limited to, logistic regression, support vector machines, neural networks, and the like. Note that such machine learning techniques are well known to those skilled in the art, and will not be described in detail herein.

In general, the Linguistic Complexity Tool adapts logistic regression based machine learning techniques to provide a probabilistic classification model that predicts the probability of an acceptable localization of arbitrary input content based on the values of the features extracted from the arbitrary input content. Similarly, in various implementations, the Linguistic Complexity Tool adapts support vector machine based machine learning techniques to map instances into a high dimensional space in which they are separable into two classes (i.e., complex assets or resources and non-complex assets or resources). These classes are separated by a hyperplane in the high dimensional space. Note that the margin between instances is maximized to create the support vector machine based classification model. In further implementations, the Linguistic Complexity Tool adapts neural network based machine learning techniques that model the functionality of the human brain, e.g., how neurons may fire on a given input. Such networks have multiple layers. An input layer of the neural network maps the input to a feature space. The last layer of the neural network is an output layer, where there is a neuron for each output class. The input and output layers are intertwined through hidden layers.

When training, learning, or otherwise constructing one or more predictive linguistic-based models, in various implementations, the Linguistic Complexity Tool considers a large number of assets (i.e., assets or resources that have been localized, either successfully or unsuccessfully) in combination with the number of times that each of those assets were localized as an indication of the complexity of each asset.

As a first stage of the process for creating more predictive linguistic-based models, the assets, along with localization count information and any associated metadata, are aggregated to create a training data set for use by any desired ML-based technique. Note that the formatting and labeling or annotating of this training data may differ, and may include any combination of machine-based and human-based annotations depending on the particular ML-based technique being used to create the predictive linguistic-based models. In various implementations, this training data is used to generate two asset classes, including complex assets or resources and non-complex assets or resources. In this case, each asset is treated as a single instance to be trained upon/classified.

In various implementations, the assets comprising the training data are transformed into a computer-readable format, which contains metadata and localization counts for each corresponding language asset or resource. These computer-readable assets are then processed using automated computer-based techniques to extract the aforementioned features from each asset. The result is a set of training data that includes the assets, and some or all of the following: an indication of whether each the asset is complex or non-complex, metadata and localization counts for each asset, and a set of features associated with each asset. This information is then provided to whatever ML-based technique is being used for training, learning, or otherwise constructing one or more predictive linguistic-based models. Further, as with any machine-learned model, any of the predictive linguistic-based models may be updated or retrained at any time by providing additional training data to whatever ML-based technique is being used.

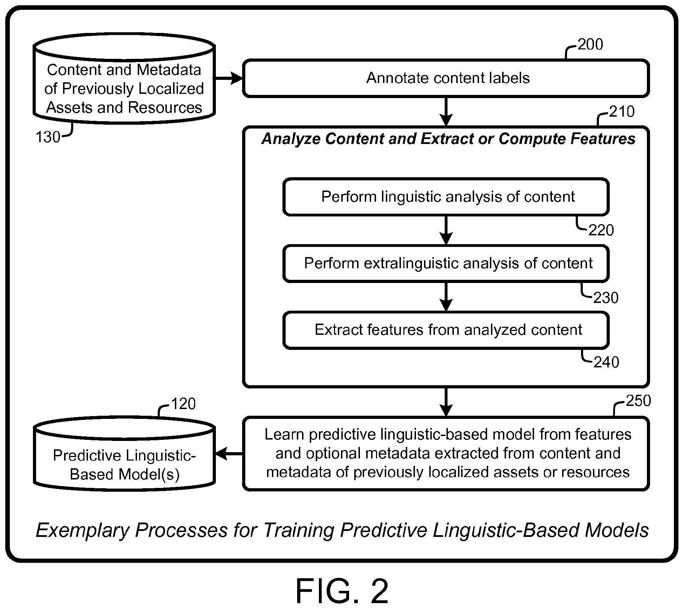

A summary of some of the processes described above for training, learning, or otherwise constructing one or more predictive linguistic-based models are illustrated by the flow diagram provided by FIG. 2. In particular, as illustrated by FIG. 2, training data comprising content 130 and metadata of previously localized assets or resources is annotated 200 or labeled using either had annotations, automated annotations, or some combination of such annotations. The resulting annotated training data is then further analyzed 210 to extract and/or compute a plurality of features. In various implementations, these features are obtained by using any combination of linguistic analysis 220 and extralinguistic analysis 230 to extract 240 the features from the analyzed content.

The result of the aforementioned processes is a set of training data that includes annotated content 130 and metadata of previously localized language assets or resources in combination with a plurality of corresponding features that have been extracted from that content. The training data is then provided to any of a variety of ML-based technique is being used for training, learning, or otherwise constructing one or more predictive linguistic-based models 120. More specifically, this training data is used to learn 250 one or more predictive linguistic-based models 120 from the features and optional metadata extracted from content 130 and metadata of previously localized language assets or resources.

## 2.5 Predicting and Presenting Complexity Scores:

In various implementations, once the particular model or models have been selected or identified for use in determining complexity scores for arbitrary source content provided as an input, the Linguistic Complexity Tool operates by extracting a plurality of features from that arbitrary source content. The Linguistic Complexity Tool then applies the selected or identified machine-learned predictive linguistic-based model to the extracted features to predict the source complexity score. In other words, given one or more trained machine-learned predictive linguistic-based models, the Linguistic Complexity Tool receives a previously unseen or arbitrary source content, calculates and/or extracts some or all of the same set of features on that source content that were used in model training, and then uses the learned model to predict a complexity score for that unseen or arbitrary source content. As discussed above, this complexity score provides a predicted indication of how difficult that source content will be for a human to localize.

In various implementations, a user interface or the like is provided to enable the user to specify or select particular machine-learned predictive linguistic-based models from a list or set of such models for use in determining complexity scores for arbitrary source language assets or resources. For example, a user may select a model trained on English to German content localizations when providing arbitrary English source content that is intended to be localized into German. Similarly, in various implementations, a user interface or the like is provided to enable the user to specify or select the languages, dialects, or linguistic styles for either or both the source language assets or resources and the corresponding destination. In this case, the Linguistic Complexity Tool may automatically select or suggest one or more appropriate machine-learned predictive linguistic-based models for use in determining complexity scores for arbitrary source language assets or resources.

In various implementations, the Linguistic Complexity Tool functions on an asset-by-asset basis. This means that each language asset or resource to be localized is assigned a complexity score by the Linguistic Complexity Tool. In the case that the asset or resource is first classified as complex content (see discussion above in Section 2.4), that content is assigned a value corresponding to the classification. For example, complex assets or resources may be assigned a value of 1 while non-complex assets or resources may be assigned a value of -1 (or any other desired values for the respective classes). The resulting complexity score is then computed as the product of the class value and the machine-learned predictive linguistic-based model, e.g.,

$$ComplexityScore_{SourceString} = Class \times Confidence \ (or \ Probability)$$

Consequently, an asset will have an assigned complexity class, a complexity score computed from the product of the assigned class and either a probability or a confidence level. Further, the use of either a probability or a confidence level is determined by the type of classifier used. For example, logistic regression outputs a probability and neural networks output a confidence.

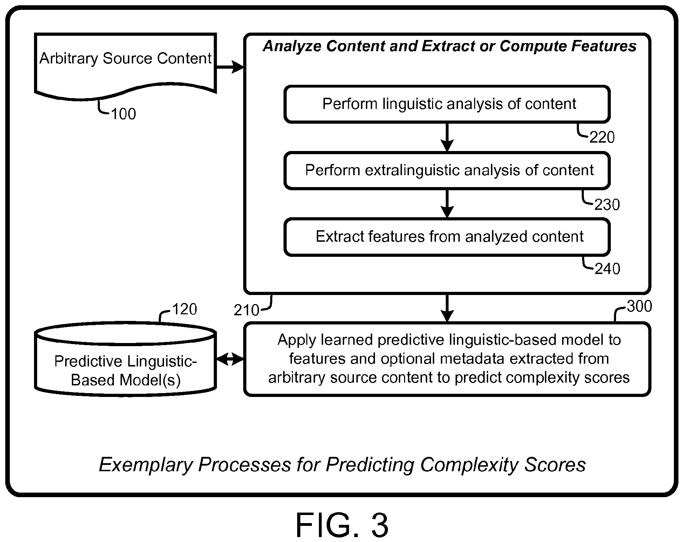

A summary of some of the processes described above determining complexity scores for arbitrary source content provided as an input are illustrated by the flow diagram provided by FIG. 3. In particular, as illustrated by FIG. 3, the same content analysis 210 illustrated with respect to FIG. 2, is applied to the arbitrary source content 100. This content analysis 210 operates to extract and/or compute some or all of the same features from the arbitrary content 100 that were extracted from the training data when creating the machine-learned predictive linguistic-based models 120. As noted above, in various implementations, these features are obtained by using any combination of linguistic analysis 220 and extralinguistic analysis 230 to extract 240 the features from the analyzed content. The Linguistic Complexity Tool then applies 300 the machine-learned predictive linguistic-based model 120 to the arbitrary source content 120 and to the features and optional metadata extracted from arbitrary source content to predict complexity scores, as described above.

## 2.6 Generation of Semantically Similar Alternatives:

In various implementations, the Linguistic Complexity Tool optionally identifies and presents one or more suggested changes to the arbitrary source content to the use. These suggestions assist the user in editing the source content to reduce the complexity score for the entire arbitrary source content or for one or more subsections of that content. For example, referring back to FIG. 1, the optional semantic similarity module 145 may comprise one or more thesauri or like databases of semantically similar words and phrases, either machine learned or curated, in conjunction with one or more language models trained to output one or more alternative language segments that are semantically similar to the input language segment.

For example, a conventional machine translation engine or the like may be used to identify alternative language segments. A conventional machine translation engine may comprise components such as statistically derived tables containing mappings between language segments in the same language, decoders to select particular alternatives and outputs, and one or more trained statistical language models. The machine translation engine may also include other models (e.g., topic models, context models, etc.) that evaluate an input language segment and its component words or phrases to identify a plurality of alternative language segments having the same or similar meaning to the input language segment.

However, in contrast to conventional uses of the machine translation engines and the like for generating suggested alternative language segments, the Linguistic Complexity Tool evaluates each suggested alternative language segment to determine changes to the complexity score that would result from the use of those alternatives to edit the original content. The Linguistic Complexity Tool can then order the suggested alternatives by their effect on the overall complexity score when presenting those alternatives to the user. Alternatively, the Linguistic Complexity Tool can present one or more of the suggested alternatives in combination with a presentation of the final complexity score that would result from use of the corresponding suggested alternative.

## 2.7 Exemplary Applications of the Linguistic Complexity Tool:

In view of the preceding discussion, it should be clear that the information provided by the Linguistic Complexity Tool enables a variety of applications and uses that improve user efficiency and reduce error rates with respect to localization workflows for arbitrary source assets or resources. Further, accurate measures of complexity provided by the Linguistic Complexity Tool allow project managers to estimate costs based on complexity, as well as feeding information back to source content producers on how content may be created in a more localization friendly manner. Further, such information enables human translators and LSPs to categorize and prioritize localization work to increase productivity.

In addition, various test cases may be automatically extracted from arbitrary source content based on complexity scores associated with that content rather than relying on human effort to focus test cases. For example, in various implementations, the complexity scores returned by the Linguistic Complexity Tool are used to prioritize test cases for evaluating localized software UI's or other content. Clearly, the complexity scores returned by the Linguistic Complexity Tool can be integrated with a wide variety of test case management solutions to improve user efficiency and coverage in testing.

Further, in various implementations, the complexity scores returned by the Linguistic Complexity Tool are integrated into editing environments or tools being used by a human translator to help the translator be more aware of potentially complex resources. In this way, the translator can use the complexity scores to prioritize their work (e.g., ordering resources based on their assigned complexity scores). Such information may also be used by translators to obtain additional contextual information based on the complexity analysis and prediction to help ensure that they localize the resource correctly and avoid any potential localization errors.

Similarly, the complexity scores returned by the Linguistic Complexity Tool can be used in combination with various authoring tools, either by the original authors of the content or by editors of the content. For example, the complexity scores returned by the Linguistic Complexity Tool for the created content can help identify assets or resources that could be potentially complex to localize either as a post-process or as a live process where the author/editor can interact directly with the output of Linguistic Complexity Tool as they work. This in turn will help make authors and editors more conscious of the localization process and thus will help them to create more easily localizable content, thereby serving the dual purpose of improving user efficiency and reducing localization error rates. In this way, the Linguistic Complexity Tool also acts as a localization-readiness tool in order to help mitigate localization difficulties further down the line (e.g. during localization, test. etc.).

### 3.0 Operational Summary of the Linguistic Complexity Tool:

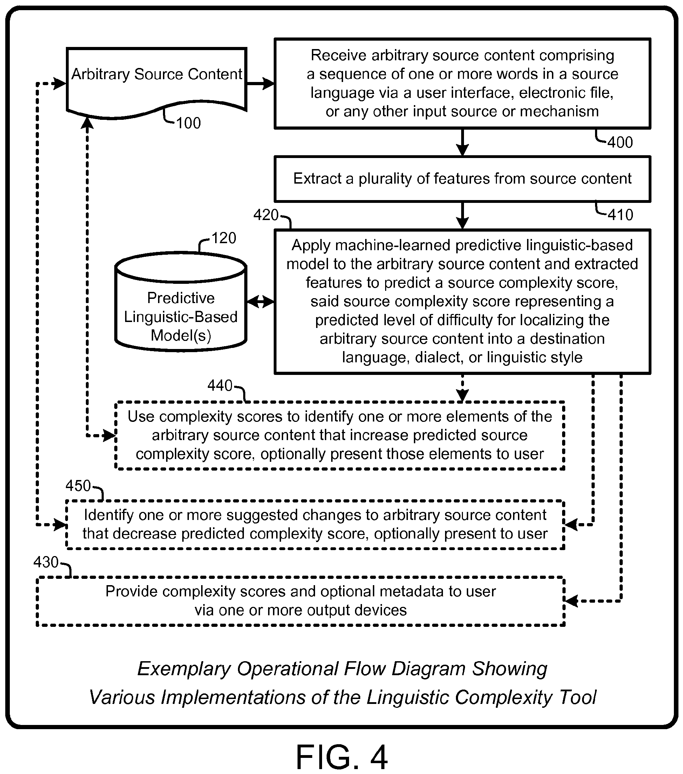

The processes described above with respect to FIG. 1 through FIG. 3, and in further view of the detailed description provided above in Sections 1 and 2, are illustrated by the general operational flow diagram of FIG. 4. In particular, FIG. 4 provides an exemplary operational flow diagram that summarizes the operation of some of the various implementations of the Linguistic Complexity Tool. Note that FIG. 4 is not intended to be an exhaustive representation of all of the various implementations of the Linguistic Complexity Tool described herein, and that the implementations represented in FIG. 4 are provided only for purposes of explanation.

Further, it should be noted that any boxes and interconnections between boxes that are represented by broken or dashed lines in FIG. 4 represent optional or alternate implementations of the Linguistic Complexity Tool described herein, and that any or all of these optional or alternate implementations, as described below, may be used in combination with other alternate implementations that are described throughout this document.

In general, as illustrated by FIG. 4, in various implementations, the Linguistic Complexity Tool begins operation by receiving 400 arbitrary source content 100 or language assets or resources comprising a sequence of one or more words in a source language via a user interface, electronic file, or any other input source or mechanism. The Linguistic Complexity Tool then extracts 410 a plurality of features from the arbitrary source content 100. Next, the Linguistic Complexity Tool applies 410 one or more machine-learned predictive linguistic-based models 120 to the arbitrary source content and extracted features to predict a source complexity score. As discussed throughout this document, this source complexity score represents a predicted level of difficulty for localizing the arbitrary source content into a destination language, dialect, or linguistic style. The resulting complexity scores and optional metadata are then provided 430 to the user via one or more output devices.

In various implementations, the Linguistic Complexity Tool uses complexity scores to identify 440 one or more elements of the arbitrary source content that increase predicted source complexity score, with those identified elements then being optionally presented to the user. In various related implementations, the Linguistic Complexity Tool identifies 450 one or more suggested changes to arbitrary source content 100 that decrease the predicted complexity score, with those suggested changed being optionally presented to user.

### 4.0 Exemplary Implementations of the Linguistic Complexity Tool:

The following paragraphs summarize various examples of implementations that may be claimed in the present document. However, it should be understood that the implementations summarized below are not intended to limit the subject matter that may be claimed in view of the detailed description of the Linguistic Complexity Tool. Further, any or all of the implementations summarized below may be claimed in any desired combination with some or all of the implementations described throughout the detailed description and any implementations illustrated in one or more of the figures, and any other implementations and examples described below. In addition, it should be noted that the following implementations and examples are intended to be understood in view of the detailed description and figures described throughout this document.

In various implementations, a Linguistic Complexity Tool is implemented by means, processes or techniques for predicting source complexity scores for entire source language assets or resources, or one or more subsections of source language assets or resources, to provide users with a predicted level of difficulty in localizing that source content into a particular target language, dialect, or linguistic style. Consequently, the Linguistic Complexity Tool provides improved user efficiency and user interaction performance by identifying language assets or resources, or subsections of those assets or resources, that are likely to be difficult or time consuming for users to localize. Further, by using the source complexity scores for identifying language assets or resources, or subsections of those assets or resources, that are likely to be difficult for users to localize, that source content can be modified prior to localization to provide lower source complexity scores (i.e., source content that is less difficult to localize). Such modifications serve to reduce error rates with respect to localized text or language presented in software applications or other media including, but not limited to, spoken or written localization of the source content.

As a first example, in various implementations, a computer-implemented process is provided via means, processes or techniques for receiving an arbitrary source content comprising a sequence of one or more words in a source language. A plurality of features are then extracted from that source content. A machine-learned predictive linguistic-based model is then applied to the features to predict a source complexity score. This source complexity score represents a predicted level of difficulty for localizing the source content into a destination content in a destination language.

As a second example, in various implementations, the first example is further modified via means, processes or techniques for identifying one or more elements of the arbitrary source content that increase the predicted source complexity score.

As a third example, in various implementations, any of the first example and the second example are further modified via means, processes or techniques for identifying one or more suggested changes to the source content that decrease the predicted complexity score.

As a fourth example, in various implementations, any of the first example, the second example, and the third example are further modified via means, processes or techniques for providing a user interface for editing one or more elements of the arbitrary source content to reduce the complexity score.

As a fifth example, in various implementations, the first example is further modified via means, processes or techniques for training the machine-learned predictive linguistic-based model on features extracted from a plurality of source assets or resources that have been successfully localized into the destination language, and on a number of times that each of the plurality of source assets or resources was localized into the destination language before the localization was deemed to be acceptable.

As a sixth example, in various implementations, any of the first example, the second example, the third example, and the fourth example are further modified via means, processes or techniques for providing real-time complexity scoring of the arbitrary source content as the arbitrary source content is being input, created, or edited by a user via a user interface.

As a seventh example, in various implementations, the first example is further modified via means, processes or techniques for selecting either or both the source language and the destination language from a plurality of available source and destination languages pairs for which one or more machine-learned predictive linguistic-based models have been created.

As an eighth example, in various implementations, the first example is further modified via means, processes or techniques for predicting source complexity scores for a plurality of arbitrary source assets or resources, and applying the complexity scores to prioritize the plurality of arbitrary source assets or resources in order of complexity.

As a ninth example, in various implementations, the first example is further modified via means, processes or techniques for designating the destination language as any language, dialect, or linguistic style that differs from the source language.

As a tenth example, in various implementations, a system implemented via a general purpose computing device is provided via means, processes or techniques for executing a computer program comprising program modules executable by the computing device, wherein the computing device is directed by the program modules of the computer program to input arbitrary source content in a source language via a user interface. The system further identifies a destination language, via the user interface, into which the arbitrary source content is to be localized. The system further extracts a plurality of features from the arbitrary source content. The system then applies a machine-learned predictive linguistic-based model to the extracted features to associate a complexity score with the arbitrary source content, said complexity score representing a predicted level of difficulty for localizing the source content into the destination language. Finally, the system presents the complexity score via the user interface.

As an eleventh example, in various implementations, the tenth example is further modified via means, processes or techniques for identifying one or more elements of the arbitrary source content that increase the predicted complexity score.

As a twelfth example, in various implementations, any of the tenth example and the eleventh example are further modified via means, processes or techniques for identifying one or more suggested changes to the arbitrary source content that decrease the predicted complexity score.

As a thirteenth example, in various implementations, the tenth example is further modified via means, processes or techniques for training the machine-learned predictive linguistic-based model on features extracted from a plurality of source assets or resources that have been successfully localized into the destination language, and on a number of times that each of the plurality of source assets or resources was localized into the destination language before the localization was deemed to be acceptable.

As a fourteenth example, in various implementations, any of the tenth example, the eleventh example, and the twelfth example are further modified via means, processes or techniques for providing real-time complexity scoring of the arbitrary source content as the arbitrary source content is being input via the user interface.

As a fifteenth example, in various implementations, any of the tenth example, the eleventh example, the twelfth example and the fourteenth example are further modified via means, processes or techniques for predicting source complexity scores for a plurality of arbitrary source contents, and applying the complexity scores to prioritize the plurality of arbitrary source contents in order of complexity.

As a sixteenth example, in various implementations, the tenth example is further modified via means, processes or techniques for designating the destination language as representing any language, dialect, or linguistic style that differs from the source language.

As a seventeenth example, in various implementations, a computer-readable medium having computer executable instructions stored therein for causing a computing device to execute a method for presenting complexity scores is provided via means, processes or techniques for receiving an input of arbitrary source content in a source language via a user interface. These instructions further cause the computing device to identify a destination language, via the user interface, into which the arbitrary source content is to be localized. These instructions further cause the computing device to extract a plurality of features from the arbitrary source content while the arbitrary source content is being input. These instructions further cause the computing device to apply a machine-learned predictive linguistic-based model to the extracted features while the arbitrary source content is being input, and associating a complexity score with the arbitrary source content in real-time while the arbitrary source content is being input. The complexity score represents a predicted level of difficulty for localizing the source content into the destination language. Finally, these instructions further cause the computing device to present the complexity score via the user interface in real-time while the arbitrary source content is being input.

As an eighteenth example, in various implementations, the tenth example is further modified via means, processes or techniques for identifying one or more elements of the arbitrary source content that increase the predicted complexity score.

As a nineteenth example, in various implementations, any of the seventeenth example and the eighteenth example are further modified via means, processes or techniques for presenting, via the user interface, one or more suggested changes to the arbitrary source content that decrease the predicted complexity score.

As a twentieth example, in various implementations, any of the seventeenth example, the eighteenth example, and the nineteenth example are further modified via means, processes or techniques for predicting source complexity scores for a plurality of arbitrary source contents, and applying the complexity scores to prioritize the plurality of arbitrary source contents in order of complexity.

## 5.0 Exemplary Operating Environments:

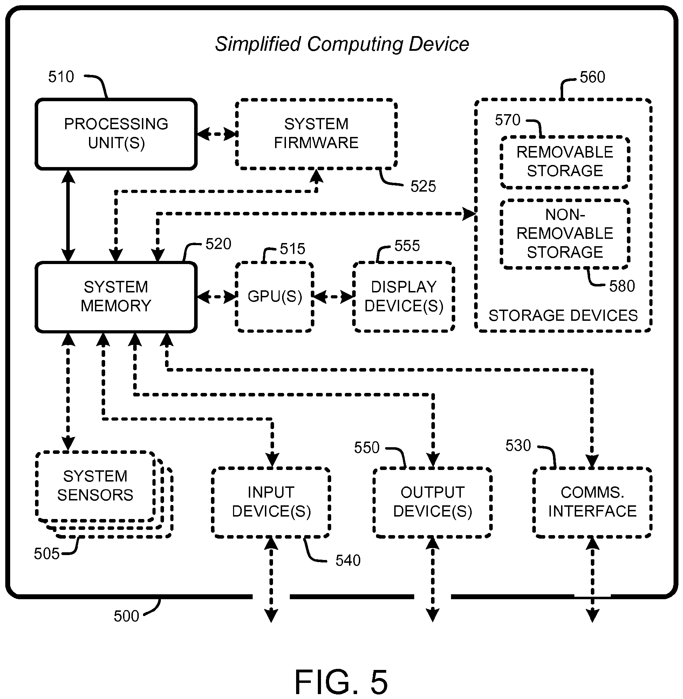

The Linguistic Complexity Tool implementations described herein are operational within numerous types of general purpose or special purpose computing system environments or configurations. FIG. 5 illustrates a simplified example of a general-purpose computer system on which various implementations and elements of the Linguistic Complexity Tool, as described herein, may be implemented. It is noted that any boxes that are represented by broken or dashed lines in the simplified computing device 500 shown in FIG. 5 represent alternate implementations of the simplified computing device. As described below, any or all of these alternate implementations may be used in combination with other alternate implementations that are described throughout this document.

The simplified computing device 500 is typically found in devices having at least some minimum computational capability such as personal computers (PCs), server computers, handheld computing devices, laptop or mobile computers, communications devices such as cell phones and personal digital assistants (PDAs), multiprocessor systems, microprocessor-based systems, set top boxes, programmable consumer electronics, network PCs, minicomputers, mainframe computers, and audio or video media players.

To allow a device to realize the Linguistic Complexity Tool implementations described herein, the device should have a sufficient computational capability and system memory to enable basic computational operations. In particular, the computational capability of the simplified computing device 500 shown in FIG. 5 is generally illustrated by one or more processing unit(s) 510, and may also include one or more graphics processing units (GPUs) 515, either or both in communication with system memory 520. Note that that the processing unit(s) 510 of the simplified computing device 500 may be specialized microprocessors (such as a digital signal processor (DSP), a very long instruction word (VLIW) processor, a field-programmable gate array (FPGA), or other micro-controller) or can be conventional central processing units (CPUs) having one or more processing cores and that may also include one or more GPU-based cores or other specific-purpose cores in a multi-core processor.

In addition, the simplified computing device 500 may also include other components, such as, for example, a communications interface 530. The simplified computing device 500 may also include one or more conventional computer input devices 540 (e.g., touchscreens, touch-sensitive surfaces, pointing devices, keyboards, audio input devices, voice or speech-based input and control devices, video input devices, haptic input devices, devices for receiving wired or wireless data transmissions, and the like) or any combination of such devices.

Similarly, various interactions with the simplified computing device 500 and with any other component or feature of the Linguistic Complexity Tool, including input, output, control, feedback, and response to one or more users or other devices or systems associated with the Linguistic Complexity Tool, are enabled by a variety of Natural User Interface (NUI) scenarios. The NUI techniques and scenarios enabled by the Linguistic Complexity Tool include, but are not limited to, interface technologies that allow one or more users user to interact with the Linguistic Complexity Tool in a "natural" manner, free from artificial constraints imposed by input devices such as mice, keyboards, remote controls, and the like.

Such NUI implementations are enabled by the use of various techniques including, but not limited to, using NUI information derived from user speech or vocalizations captured via microphones or other input devices 540 or system sensors 505. Such NUI implementations are also enabled by the use of various techniques including, but not limited to, information derived from system sensors 505 or other input devices 540 from a user's facial expressions and from the positions, motions, or orientations of a user's hands, fingers, wrists, arms, legs, body, head, eyes, and the like, where such information may be captured using various types of 2D or depth imaging devices such as stereoscopic or time-of-flight camera systems, infrared camera systems, RGB (red, green and blue) camera systems, and the like, or any combination of such devices. Further examples of such NUI implementations include, but are not limited to, NUI information derived from touch and stylus recognition, gesture recognition (both onscreen and adjacent to the screen or display surface), air or contact-based gestures, user touch (on various surfaces, objects or other users), hover-based inputs or actions, and the like. Such NUI implementations may also include, but are not limited to, the use of various predictive machine intelligence processes that evaluate current or past user behaviors, inputs, actions, etc., either alone or in combination with other NUI information, to predict information such as user intentions, desires, and/or goals. Regardless of the type or source of the NUI-based information, such information may then be used to initiate, terminate, or otherwise control or interact with one or more inputs, outputs, actions, or functional features of the Linguistic Complexity Tool.

However, it should be understood that the aforementioned exemplary NUI scenarios may be further augmented by combining the use of artificial constraints or additional signals with any combination of NUI inputs. Such artificial constraints or additional signals may be imposed or generated by input devices 540 such as mice, keyboards, and remote controls, or by a variety of remote or user worn devices such as accelerometers, electromyography (EMG) sensors for receiving myoelectric signals representative of electrical signals generated by user's muscles, heart-rate monitors, galvanic skin conduction sensors for measuring user perspiration, wearable or remote biosensors for measuring or otherwise sensing user brain activity or electric fields, wearable or remote biosensors for measuring user body temperature changes or differentials, and the like. Any such information derived from these types of artificial constraints or additional signals may be combined with any one or more NUI inputs to initiate, terminate, or otherwise control or interact with one or more inputs, outputs, actions, or functional features of the Linguistic Complexity Tool.

The simplified computing device 500 may also include other optional components such as one or more conventional computer output devices 550 (e.g., display device(s) 555, audio output devices, video output devices, devices for transmitting wired or wireless data transmissions, and the like). Note that typical communications interfaces 530, input devices 540, output devices 550, and storage devices 560 for general-purpose computers are well known to those skilled in the art, and will not be described in detail herein.

The simplified computing device 500 shown in FIG. 5 may also include a variety of computer-readable media. Computer-readable media can be any available media that can be accessed by the computing device 500 via storage devices 560, and include both volatile and nonvolatile media that is either removable 570 and/or non-removable 580, for storage of information such as computer-readable or computer-executable instructions, data structures, program modules, or other data.

Computer-readable media includes computer storage media and communication media. Computer storage media refers to tangible computer-readable or machine-readable media or storage devices such as digital versatile disks (DVDs), Blu-ray discs (BD), compact discs (CDs), floppy disks, tape drives, hard drives, optical drives, solid state memory devices, random access memory (RAM), read-only memory (ROM), electrically erasable programmable read-only memory (EEPROM), CD-ROM or other optical disk storage, smart cards, flash memory (e.g., card, stick, and key drive), magnetic cassettes, magnetic tapes, magnetic disk storage, magnetic strips, or other magnetic storage devices. Further, a propagated signal is not included within the scope of computer-readable storage media.

Retention of information such as computer-readable or computer-executable instructions, data structures, program modules, and the like, can also be accomplished by using any of a variety of the aforementioned communication media (as opposed to computer storage media) to encode one or more modulated data signals or carrier waves, or other transport mechanisms or communications protocols, and can include any wired or wireless information delivery mechanism. Note that the terms "modulated data signal" or "carrier wave" generally refer to a signal that has one or more of its characteristics set or changed in such a manner as to encode information in the signal. For example, communication media can include wired media such as a wired network or direct-wired connection carrying one or more modulated data signals, and wireless media such as acoustic, radio frequency (RF), infrared, laser, and other wireless media for transmitting and/or receiving one or more modulated data signals or carrier waves.

Furthermore, software, programs, and/or computer program products embodying some or all of the various Linguistic Complexity Tool implementations described herein, or portions thereof, may be stored, received, transmitted, or read from any desired combination of computer-readable or machine-readable media or storage devices and communication media in the form of computer-executable instructions or other data structures. Additionally, the claimed subject matter may be implemented as a method, apparatus, or article of manufacture using standard programming and/or engineering techniques to produce software, firmware 525, hardware, or any combination thereof to control a computer to implement the disclosed subject matter. The term "article of manufacture" as used herein is intended to encompass a computer program accessible from any computer-readable device, or media.

The Linguistic Complexity Tool implementations described herein may be further described in the general context of computer-executable instructions, such as program modules, being executed by a computing device. Generally, program modules include routines, programs, objects, components, data structures, and the like, that perform particular tasks or implement particular abstract data types. The Linguistic Complexity Tool implementations may also be practiced in distributed computing environments where tasks are performed by one or more remote processing devices, or within a cloud of one or more devices, that are linked through one or more communications networks. In a distributed computing environment, program modules may be located in both local and remote computer storage media including media storage devices. Additionally, the aforementioned instructions may be implemented, in part or in whole, as hardware logic circuits, which may or may not include a processor.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), and so on.

## 6.0 Other Implementations:

The foregoing description of the Linguistic Complexity Tool has been presented for the purposes of illustration and description. It is not intended to be exhaustive or to limit the claimed subject matter to the precise form disclosed. Many modifications and variations are possible in light of the above teaching. Further, it should be noted that any or all of the aforementioned alternate implementations may be used in any combination desired to form additional hybrid implementations of the Linguistic Complexity Tool. It is intended that the scope of the Linguistic Complexity Tool be limited not by this detailed description, but rather by the claims appended hereto. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and other equivalent features and acts are intended to be within the scope of the claims.

What has been described above includes example implementations. It is, of course, not possible to describe every conceivable combination of components or methodologies for purposes of describing the claimed subject matter, but one of ordinary skill in the art may recognize that many further combinations and permutations are possible.

In regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the claimed subject matter. In this regard, it will also be recognized that the foregoing implementations include a system as well as a computer-readable storage media having computer-executable instructions for performing the acts and/or events of the various methods of the claimed subject matter.

There are multiple ways of realizing the foregoing implementations (such as an appropriate application programming interface (API), tool kit, driver code, operating system, control, standalone or downloadable software object, or the like), which enable applications and services to use the implementations described herein. The claimed subject matter contemplates this use from the standpoint of an API (or other software object), as well as from the standpoint of a software or hardware object that operates according to the implementations set forth herein. Thus, various implementations described herein may have aspects that are wholly in hardware, or partly in hardware and partly in software, or wholly in software.

The aforementioned systems have been described with respect to interaction between several components. It will be appreciated that such systems and components can include those components or specified sub-components, some of the specified components or sub-components, and/or additional components, and according to various permutations and combinations of the foregoing. Sub-components can also be implemented as components communicatively coupled to other components rather than included within parent components (e.g., hierarchical components).

Additionally, it is noted that one or more components may be combined into a single component providing aggregate functionality or divided into several separate sub-components, and any one or more middle layers, such as a management layer, may be provided to communicatively couple to such sub-components in order to provide integrated functionality. Any components described herein may also interact with one or more other components not specifically described herein but generally known by those of skill in the art.

**Claims**

1. A computer-implemented process, comprising:

   receiving (400) an arbitrary source content (100) comprising a sequence of one or more words in a source language;
   extracting (410) a plurality of features from the source content;
   applying (420) a machine-learned predictive linguistic-based model (120) to the features to predict a source complexity score;
   wherein the source complexity score represents a predicted level of difficulty for localizing the source content into a destination content in a destination language; and
   presenting (430) the complexity score via a user interface;
   wherein the machine-learned predictive linguistic-based model is trained on features extracted from a plurality of source assets or resources (130) that have been successfully localized into the destination language, and on a number of times that each of the plurality of source assets or resources was localized into the destination language before the localization was deemed to be acceptable.

2. The computer-implemented process of claim 1 further comprising applying (440) the machine-learned predictive linguistic-based model (120) to identify one or more elements of the arbitrary source content (100) that increase the predicted source complexity score.

3. The computer-implemented process of claim 1 or claim 2 further comprising automatically identifying (450) one or more suggested changes to the source content (100) that decrease the predicted complexity score.

4. The computer-implemented process of claim 1 or claim 2 or claim 3 wherein the user interface enables editing one or more elements of the arbitrary source content (100) to reduce the complexity score.

5. The computer-implemented process of claim 1 or claim 2 or claim 3 or claim 4 wherein the user interface provides real-time complexity scoring of the arbitrary source content (100) as the arbitrary source content is being input, created, or edited by a user via the user interface.

6. The computer-implemented process of claim 1 wherein the user interface enables selecting either or both the source language and the destination language from a plurality of available source and destination languages pairs for which one or more machine-learned predictive linguistic-based models (120) have been created.

7. The computer-implemented process of claim 1 further comprising:

   predicting source complexity scores for a plurality of arbitrary source assets or resources (130); and
   applying the complexity scores to prioritize the plurality of arbitrary source assets or resources in order of complexity.

8. A system, comprising:

   a general purpose computing device (500); and
   a computer program comprising program modules (105, 115, 125, 135) executable by the computing device, wherein the computing device is directed by the program modules of the computer program to:

      input arbitrary source content (100) in a source language via a user interface;
      identify a destination language, via the user interface, into which the arbitrary source content is to be localized;
      extract a plurality of features from the arbitrary source content;
      apply a machine-learned predictive linguistic-based model (120) to the extracted features to associate a complexity score with the arbitrary source content, said complexity score representing a predicted level of difficulty for localizing the source content into the destination language; and

presenting the complexity score via the user interface;

wherein the machine-learned predictive linguistic-based model is trained on features extracted from a plurality of source assets or resources (130) that have been successfully localized into the destination language, and on a number of times that each of the plurality of source assets or resources was localized into the destination language before the localization was deemed to be acceptable.

9. A computer-readable medium having computer executable instructions stored therein, said instructions causing a computing device to execute a method comprising:

receiving (400) an input of arbitrary source content (100) in a source language via a user interface;

identifying a destination language, via the user interface, into which the arbitrary source content is to be localized;

extracting (410) a plurality of features from the arbitrary source content while the arbitrary source content is being input;

applying (420) a machine-learned predictive linguistic-based model (120) to the extracted features while the arbitrary source content is being input, and associating a complexity score with the arbitrary source content in real-time while the arbitrary source content is being input;

wherein the complexity score represents a predicted level of difficulty for localizing the source content into the destination language; and

presenting (430) the complexity score via the user interface in real-time while the arbitrary source content is being input;

wherein the machine-learned predictive linguistic-based model is trained on features extracted from a plurality of source assets or resources (130) that have been successfully localized into the destination language, and on a number of times that each of the plurality of source assets or resources was localized into the destination language before the localization was deemed to be acceptable.

10. The system of claim 8 further comprising applying (440) the machine-learned predictive linguistic-based model (120) to identify one or more elements of the arbitrary source content (100) that increase the predicted complexity score.

11. The system of claim 8 or claim 10 further comprising automatically presenting (450) one or more suggested changes to the arbitrary source content (100) that decrease the predicted complexity score.

12. The system of claim 8 further comprising providing real-time complexity scoring of the arbitrary source content (100) as the arbitrary source content is being input via the user interface.

13. The computer-readable medium of claim 9 further comprising instructions for presenting, via the user interface, one or more suggested changes to the arbitrary source content (100) that decrease the predicted complexity score.

14. The computer-readable medium of claim 9 further comprising instructions for:

predicting source complexity scores for a plurality of arbitrary source contents (100); and

applying the complexity scores to prioritize the plurality of arbitrary source contents in order of complexity.

**Patentansprüche**

1. Computerimplementiertes Verfahren, umfassend:

Empfangen (400) eines beliebigen Quellinhalts (100), der eine Sequenz von einem oder mehreren Wörtern in einer Quellsprache umfasst;

Extrahieren (410) einer Vielzahl von Merkmalen aus dem Quellinhalt;

Anwenden (420) eines maschinell erlernten prädiktiven linguistikbasierten Modells (120) auf die Merkmale, um eine Quellkomplexitätsbewertung vorauszusagen;

wobei die Quellkomplexitätsbewertung einen vorausgesagten Schwierigkeitsgrad zum Lokalisieren des Quellinhalts in einen Zielinhalt in einer Zielsprache darstellt; und

Präsentieren (430) der Komplexitätsbewertung über eine Benutzerschnittstelle;

wobei das maschinell erlernte prädiktive linguistikbasierte Modell auf Merkmalen trainiert wird, die aus einer Vielzahl von Quellbeständen oder - ressourcen (130), die erfolgreich in die Zielsprache lokalisiert worden sind, extrahiert werden, und auf einer Anzahl von Malen, die jeder der Vielzahl von Quellbeständen oder -ressourcen in die Zielsprache lokalisiert wurde, bevor die Lokalisierung als akzeptabel angesehen wurde.

2. Computerimplementiertes Verfahren nach Anspruch 1, weiter umfassend Anwenden (440) des maschinell erlernten prädiktiven linguistikbasierten Modells (120), um ein oder mehrere Elemente des beliebigen Quellinhalts (100) zu identifizieren, die die vorausgesagte Quellkomplexitätsbewertung erhöhen.

3. Computerimplementiertes Verfahren nach Anspruch 1 oder Anspruch 2, weiter umfassend automatisches Identifizieren (450) von einer oder mehreren vorgeschlagenen Änderungen an dem Quellinhalt (100), die die vorausgesagte Komplexitätsbewertung verringern.

4. Computerimplementiertes Verfahren nach Anspruch 1 oder Anspruch 2 oder Anspruch 3, wobei die Benutzerschnittstelle ein Editieren eines oder mehrerer Elemente des beliebigen Quellinhalts (100) ermöglicht, um die Komplexitätsbewertung zu reduzieren.

5. Computerimplementiertes Verfahren nach Anspruch 1 oder Anspruch 2 oder Anspruch 3 oder Anspruch 4, wobei die Benutzerschnittstelle eine Echtzeit-Komplexitätsbewertung des beliebigen Quellinhalts (100) bereitstellt, wenn der beliebige Quellinhalt von einem Benutzer über die Benutzeroberfläche eingegeben, erzeugt oder bearbeitet wird.

6. Computerimplementiertes Verfahren nach Anspruch 1, wobei die Benutzerschnittstelle ein Auswählen von der Quellsprache und/oder der Zielsprache aus einer Vielzahl von verfügbaren Quell- und Zielsprachenpaaren ermöglicht, für die ein oder mehrere maschinell erlernte prädiktive linguistikbasierte Modelle (120) erstellt worden sind.

7. Computerimplementiertes Verfahren nach Anspruch 1, weiter umfassend:

Voraussagen einer Quellkomplexitätsbewertung für eine Vielzahl von beliebigen Quellbeständen oder -ressourcen (130); und
Anwenden der Komplexitätsbewertung, um die Vielzahl von beliebigen Quellbeständen oder -ressourcen in der Reihenfolge der Komplexität zu priorisieren.

8. System, umfassend:

eine für allgemeine Zwecke vorgesehene Rechenvorrichtung (500); und
ein Computerprogramm, das Programmmodule (105, 115, 125, 135) umfasst, die durch die Rechenvorrichtung ausführbar sind, wobei die Rechenvorrichtung durch die Programmmodule des Computerprogramms angewiesen wird, zum:

Eingeben von beliebigem Quellinhalt (100) in eine Quellsprache über eine Benutzerschnittstelle;
Identifizieren einer Zielsprache, über die Benutzerschnittstelle, in die der beliebige Quellinhalt lokalisiert werden soll;
Extrahieren einer Vielzahl von Merkmalen aus dem beliebigem Quellinhalt;
Anwenden eines maschinell erlernten prädiktiven linguistikbasierten Modells (120) auf die extrahierten Merkmale, um eine Komplexitätsbewertung dem beliebigem Quellinhalt zuzuordnen, wobei die Komplexitätsbewertung einen vorausgesagten Schwierigkeitsgrad zum Lokalisieren des Quellinhalts in die Zielsprache darstellt; und
Präsentieren der Komplexitätsbewertung über die Benutzerschnittstelle;

wobei das maschinell erlernte prädiktive linguistikbasierte Modell auf Merkmalen trainiert wird, die aus einer Vielzahl von Quellbeständen oder - ressourcen (130), die erfolgreich in die Zielsprache lokalisiert worden sind, extrahiert werden, und auf einer Anzahl von Malen, die jeder der Vielzahl von Quellbeständen oder -ressourcen in die Zielsprache lokalisiert wurde, bevor die Lokalisierung als akzeptabel angesehen wurde.

9. Computerlesbares Medium mit darin gespeicherten computerausführbaren Anweisungen, wobei die Anweisungen eine Rechenvorrichtung veranlassen, ein Verfahren auszuführen, welches umfasst:

Empfangen (400) einer Eingabe eines beliebigen Quellinhalts (100) in einer Quellsprache über eine Benutzerschnittstelle;

Identifizieren einer Zielsprache, über die Benutzerschnittstelle, in die der beliebige Quellinhalt lokalisiert werden soll;

Extrahieren (410) einer Vielzahl von Merkmalen aus dem beliebigem Quellinhalt, während der beliebige Quellinhalt eingegeben wird;

Anwenden (420) eines maschinell erlernten prädiktiven linguistikbasierten Modells (120) auf die extrahierten Merkmale, während der beliebige Quellinhalt eingegeben wird, und Zuordnen einer Komplexitätsbewertung zu dem beliebigem Quellinhalt in Echtzeit, während der beliebige Quellinhalt eingegeben wird;

wobei die Komplexitätsbewertung einen vorausgesagten Schwierigkeitsgrad zum Lokalisieren des Quellinhalts in die Zielsprache darstellt; und

Präsentieren (430) der Komplexitätsbewertung über die Benutzerschnittstelle in Echtzeit, während der beliebige Quellinhalt eingegeben wird;

wobei das maschinell erlernte prädiktive linguistikbasierte Modell auf Merkmalen trainiert wird, die aus einer Vielzahl von Quellbeständen oder - ressourcen (130), die erfolgreich in die Zielsprache lokalisiert worden sind, extrahiert werden, und auf einer Anzahl von Malen, die jeder der Vielzahl von Quellbeständen oder -ressourcen in die Zielsprache lokalisiert wurde, bevor die Lokalisierung als akzeptabel angesehen wurde.

10. System nach Anspruch 8, weiter umfassend Anwenden (440) des maschinell erlernten prädiktiven linguistikbasierten Modells (120), um ein oder mehrere Elemente des beliebigen Quellinhalts (100) zu identifizieren, die die vorausgesagte Quellkomplexitätsbewertung erhöhen.

11. System nach Anspruch 8 oder Anspruch 10, weiter umfassend automatisches Präsentieren (450) von einer oder mehreren vorgeschlagenen Änderungen an dem Quellinhalt (100), die die vorausgesagte Komplexitätsbewertung verringern.

12. System nach Anspruch 8, weiter umfassend Bereitstellen einer Echtzeit-Komplexitätsbewertung des beliebigen Quellinhalts (100), während der beliebige Quellinhalt über die Benutzerschnittstelle eingegeben wird.

13. Computerlesbares Medium nach Anspruch 9, weiter umfassend Anweisungen zum Präsentieren, über die Benutzerschnittstelle, von einer oder mehreren vorgeschlagenen Änderungen an dem Quellinhalt (100), die die vorausgesagte Komplexitätsbewertung verringern.

14. Computerlesbares Medium nach Anspruch 9, weiter umfassend Anweisungen zum:

Voraussagen einer Quellkomplexitätsbewertung für eine Vielzahl von beliebigen Quellinhalten (100); und

Anwenden der Komplexitätsbewertung, um die Vielzahl von beliebigen Quellinhalten in der Reihenfolge der Komplexität zu priorisieren.

## Revendications

1. Processus mis en oeuvre par ordinateur, comprenant :

la réception (400) d'un contenu source arbitraire (100) comprenant une séquence d'un ou de plusieurs mots dans une langue source ;

l'extraction (410) d'une pluralité de caractéristiques du contenu source ;

l'application (420) d'un modèle linguistique prédictif à apprentissage automatique (120) aux caractéristiques pour prédire un score de complexité source ;

dans lequel le score de complexité source représente un niveau prédit de difficulté pour localiser le contenu source dans un contenu de destination dans une langue de destination ; et

la présentation (430) du score de complexité via une interface utilisateur ;

dans lequel le modèle linguistique prédictif à apprentissage automatique est formé sur des caractéristiques extraites d'une pluralité de biens ou ressources sources (130) qui ont été localisés avec succès dans la langue de destination, et sur un nombre de fois où chacun de la pluralité de biens ou ressources sources a été localisé dans la langue de destination avant que la localisation n'ait été jugée acceptable.

2. Processus mis en oeuvre par ordinateur selon la revendication 1, comprenant en outre l'application (440) du modèle linguistique prédictif à apprentissage automatique (120) pour identifier un ou plusieurs éléments du contenu source arbitraire (100) qui augmentent le score de complexité source prédit.

3. Processus mis en oeuvre par ordinateur selon la revendication 1 ou la revendication 2, comprenant en outre l'identification automatique (450) d'une ou de plusieurs modifications suggérées du contenu source (100) qui réduisent le score de complexité prédit.

4. Processus mis en oeuvre par ordinateur selon la revendication 1 ou la revendication 2 ou la revendication 3, dans lequel l'interface utilisateur permet d'éditer un ou plusieurs éléments du contenu source arbitraire (100) pour réduire le score de complexité.

5. Processus mis en oeuvre par ordinateur selon la revendication 1 ou la revendication 2 ou la revendication 3 ou la revendication 4, dans lequel l'interface utilisateur fournit une évaluation par score de complexité en temps réel du contenu source arbitraire (100) au fur et à mesure de la saisie, de la création ou de l'édition du contenu source arbitraire par un utilisateur via l'interface utilisateur.

6. Processus mis en oeuvre par ordinateur selon la revendication 1, dans lequel l'interface utilisateur permet de sélectionner l'une ou l'autre de la langue source et de la langue de destination, ou les deux, parmi une pluralité de paires de langues source et de destination disponibles pour lesquelles un ou plusieurs modèles linguistiques prédictifs à apprentissage automatique (120) ont été créés.

7. Processus mis en oeuvre par ordinateur selon la revendication 1, comprenant en outre :

   la prédiction de scores de complexité sources pour une pluralité de biens ou ressources sources arbitraires (130) ; et
   l'application des scores de complexité pour prioriser la pluralité de biens ou ressources sources arbitraires par ordre de complexité.

8. Système, comprenant :

   un dispositif informatique universel (500) ; et
   un programme informatique comprenant des modules de programme (105, 115, 125, 135) exécutables par le dispositif informatique, dans lequel les modules de programme du programme informatique ordonnent au dispositif informatique de :

      saisir du contenu source arbitraire (100) dans une langue source via une interface utilisateur ;
      identifier une langue de destination, via l'interface utilisateur, dans laquelle le contenu source arbitraire doit être localisé ;
      extraire une pluralité de caractéristiques du contenu source arbitraire ;
      appliquer un modèle linguistique prédictif à apprentissage automatique (120) aux caractéristiques extraites pour associer un score de complexité au contenu source arbitraire, ledit score de complexité représentant un niveau prédit de difficulté pour localiser le contenu source dans la langue de destination ; et
      présenter le score de complexité via l'interface utilisateur ;

   dans lequel le modèle linguistique prédictif à apprentissage automatique est formé sur des caractéristiques extraites d'une pluralité de biens ou ressources sources (130) qui ont été localisés avec succès dans la langue de destination, et sur un nombre de fois où chacun de la pluralité de biens ou ressources sources a été localisé dans la langue de destination avant que la localisation n'ait été jugée acceptable.

9. Support lisible par ordinateur ayant des instructions exécutables par ordinateur stockées dedans, lesdites instructions causant l'exécution par un dispositif informatique d'un procédé comprenant :

   la réception (400) d'une saisie de contenu source arbitraire (100) dans une langue source via une interface utilisateur ;
   l'identification d'une langue de destination, via l'interface utilisateur, dans laquelle le contenu source arbitraire doit être localisé ;
   l'extraction (410) d'une pluralité de caractéristiques du contenu source arbitraire pendant la saisie du contenu source arbitraire ;
   l'application (420) d'un modèle linguistique prédictif à apprentissage automatique (120) aux caractéristiques extraites pendant la saisie du contenu source arbitraire, et l'association d'un score de complexité au contenu source arbitraire en temps réel pendant la saisie du contenu source arbitraire ;

dans lequel le score de complexité représente un niveau prédit de difficulté pour localiser le contenu source dans la langue de destination ; et

la présentation (430) du score de complexité via l'interface utilisateur en temps réel pendant la saisie du contenu source arbitraire ;

dans lequel le modèle linguistique prédictif à apprentissage automatique est formé sur des caractéristiques extraites d'une pluralité de biens ou ressources sources (130) qui ont été localisés avec succès dans la langue de destination, et sur un nombre de fois où chacun de la pluralité de biens ou ressources sources a été localisé dans la langue de destination avant que la localisation n'ait été jugée acceptable.

10. Système selon la revendication 8, comprenant en outre l'application (440) du modèle linguistique prédictif à apprentissage automatique (120) pour identifier un ou plusieurs éléments du contenu source arbitraire (100) qui augmentent le score de complexité prédit.

11. Système selon la revendication 8 ou la revendication 10, comprenant en outre la présentation automatique (450) d'une ou de plusieurs modifications suggérées du contenu source arbitraire (100) qui réduisent le score de complexité prédit.

12. Système selon la revendication 8, comprenant en outre la fourniture d'une évaluation par score de complexité en temps réel du contenu source arbitraire (100) au fur et à mesure que le contenu source arbitraire est saisi via l'interface utilisateur.

13. Support lisible par ordinateur selon la revendication 9, comprenant en outre des instructions pour présenter, via l'interface utilisateur, une ou plusieurs modifications suggérées du contenu source arbitraire (100) qui réduisent le score de complexité prédit.

14. Support lisible par ordinateur selon la revendication 9, comprenant en outre des instructions pour :

prédire des scores de complexité sources pour une pluralité de contenus sources arbitraires (100) ; et
appliquer les scores de complexité pour prioriser la pluralité de contenus sources arbitraires par ordre de complexité.

**User Interface Module**

Input or edit arbitrary source content, optionally identify source and/or destination language, dialect, or linguistic style, optionally select model, etc.

110

Arbitrary Source Content

100

Content and Metadata of Previously Localized Assets and Resources

130

**Feature Extraction Module**

Extract features including, but not limited to:
- Context Features
- Localization Features
- Linguistic Features
- Surface Features
- Etc.

105

**Model Construction Module**

Apply machine-learning techniques to features extracted from content of language assets and resources that have been localized into a destination language, and on metadata including, but not limited to, a number of times that each asset or resource was localized before the localization was deemed to be acceptable

135

120

Predictive Linguistic-Based Model(s)

140

**Model Application Module**

Apply predictive linguistic-based model to features and optional metadata to predict source complexity scores for the source content or subsections of the source content

115

125

**Complexity Assistance Module**

Optionally identify elements of the arbitrary source content that increase complexity score, optionally identify one or more suggested changes to the source content to decrease complexity score

**Score Output Module**

Output source complexity scores and optional metadata via one or more output devices

145

**Semantic Similarity Module**

Optionally generate semantically similar alternate content segments from arbitrary source content, determine complexity scores of these alternatives and provide alternatives resulting in decreased complexity scores as suggested changes to the arbitrary source content

150

Semantic Language Model(s)

*Exemplary Architectural Flow Diagram Showing Various Implementations of a "Linguistic Complexity Tool"*

## FIG. 1

Content and Metadata of Previously Localized Assets and Resources

130

Annotate content labels

200

**Analyze Content and Extract or Compute Features**

210

Perform linguistic analysis of content

220

Perform extralinguistic analysis of content

230

Extract features from analyzed content

240

Learn predictive linguistic-based model from features and optional metadata extracted from content and metadata of previously localized assets or resources

250

Predictive Linguistic-Based Model(s)

120

*Exemplary Processes for Training Predictive Linguistic-Based Models*

FIG. 2

Arbitrary Source Content

100

**Analyze Content and Extract or Compute Features**

Perform linguistic analysis of content

220

Perform extralinguistic analysis of content

230

Extract features from analyzed content

240

210

120

Predictive Linguistic-
Based Model(s)

300

Apply learned predictive linguistic-based model to
features and optional metadata extracted from
arbitrary source content to predict complexity scores

*Exemplary Processes for Predicting Complexity Scores*

# FIG. 3

Arbitrary Source Content
100

Receive arbitrary source content comprising a sequence of one or more words in a source language via a user interface, electronic file, or any other input source or mechanism
400

Extract a plurality of features from source content
410

420

120

Predictive Linguistic-Based Model(s)

Apply machine-learned predictive linguistic-based model to the arbitrary source content and extracted features to predict a source complexity score, said source complexity score representing a predicted level of difficulty for localizing the arbitrary source content into a destination language, dialect, or linguistic style

440
Use complexity scores to identify one or more elements of the arbitrary source content that increase predicted source complexity score, optionally present those elements to user

450
Identify one or more suggested changes to arbitrary source content that decrease predicted complexity score, optionally present to user

430
Provide complexity scores and optional metadata to user via one or more output devices

*Exemplary Operational Flow Diagram Showing Various Implementations of the Linguistic Complexity Tool*

FIG. 4

**Simplified Computing Device**

510 — PROCESSING UNIT(S)

SYSTEM FIRMWARE — 525

560 — 
570 — REMOVABLE STORAGE

NON-REMOVABLE STORAGE — 580

STORAGE DEVICES

520 — SYSTEM MEMORY

515 — GPU(S)

555 — DISPLAY DEVICE(S)

SYSTEM SENSORS — 505

INPUT DEVICE(S) — 540

550 — OUTPUT DEVICE(S)

530 — COMMS. INTERFACE

500

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NANCY L. UNDERWOOD.** *Translatability Checker: A Tool to Help Decide Whether to Use MT*